# FASCICULE DE BREVET EUROPEEN

(11) **EP 2 905 091 B1**
(45) Date de publication et mention de la délivrance du brevet: **09.11.2016**
(21) Numéro de dépôt: 15154276.8
(22) Date de dépôt: 09.02.2015
(51) Int. Cl.: B21J 5/06, B21J 15/02, B23K 20/12, B29C 65/74, B21J 15/04

(54) **Procédé d'assemblage d'un insert sur un support**
Verfahren zum Zusammenbau eines Einsatzes auf einer Unterlage
Method for assembling an insert on a mounting

(30) Priorité: 07.02.2014 FR 1400356
(43) Date de publication de la demande: 12.08.2015
(73) Titulaire: Bollhoff Otalu S.A., 73490 La Ravoire (FR)
(72) Inventeur: Chalvet, Franck, 73190 Saint Baldoph (FR); Lejars, Patrick, 73610 St Alban de Montbel (FR)
(74) Mandataire: Hecké, Gérard

(56) Documents cités:
- WO-A1-2012/153182
- FR-A1- 2 762 045
- GB-A- 2 091 610
- JP-A- 2004 017 084
- US-A1- 2006 024 145

## Description

### Domaine technique de l'invention

L'invention est relative à l'assemblage d'un insert sur un support.

### État de la technique

Actuellement, il est difficile d'assembler des tôles fines, des tubes ou des profilés fins entre eux, et plus particulièrement d'assembler des inserts, dont le rôle est de relier deux pièces entre elles, sur des supports à paroi mince.

Par exemple, on peut percer par enlèvement de matière, un trou dans le support, puis souder un insert en surface du support. Ce perçage est effectué au moyen d'un foret ou d'une mèche, et pour des matériaux très durs on utilise en général l'électroérosion, les ultrasons ou le laser. Mais un tel perçage est destiné aux matériaux épais et très résistants car l'enlèvement de matière généré peut affaiblir la résistance d'un support à paroi mince.

On peut également effectuer un perçage par friction à chaud qui consiste à former un orifice dans un support à l'aide d'une broche ayant une tête conique. La broche est mise en rotation autour d'un axe de rotation et on exerce une pression axiale de la tête conique contre le support selon l'axe de rotation, de manière à former, à partir de la matière du support percée, un manchon autour de l'orifice. On note également le perçage par friction à chaud, un perçage sans enlèvement de matière. Puis on taraude l'intérieur du manchon pour former un écrou directement dans le support. L'étape de taraudage est effectuée par refoulement de matière ou déformation à froid. Mais l'étape de taraudage ne peut pas être réalisée sur des supports à paroi très mince car elle peut déformer le support. En outre, la hauteur du tronçon taraudé dépend de la hauteur du manchon formé et il est donc difficile de réaliser des inserts ayants des formes et des tronçons filetés variés sur un même support. Par ailleurs, le manchon formé autour de l'orifice ne permet pas de former une entretoise.

On peut également citer un procédé dans lequel on réalise un orifice dans le support par un perçage par friction à chaud à l'aide d'un appareil de perçage muni d'une broche à tête conique. Puis, on monte un insert sur un appareil de pose, on met en rotation l'appareil de pose et on introduit l'insert dans l'orifice. Puis, on soude l'insert au support par une friction engendrée par la rotation et par une mise en pression de l'insert contre le support jusqu'à fusion du support. Lors d'une dernière étape, on arrête la rotation de l'appareil de pose et on retire l'appareil de pose de l'insert. Un tel procédé est par exemple décrit dans le document FR-A-2 762 045. Mais ce procédé multiplie les étapes ce qui ralentit l'assemblage de l'insert et rend le procédé plus complexe et plus difficile à maîtriser.

### Objet de l'invention

L'objet de l'invention consiste à fournir un procédé d'assemblage d'un insert sur un support qui permette de pallier les inconvénients précités, et en particulier un procédé pour assembler des inserts simplifié et plus rapide à mettre en oeuvre.

Selon un aspect de l'invention, il est proposé un procédé d'assemblage d'un insert sur un support, comprenant un appareil muni d'une broche montée à rotation sur un corps de l'appareil.

Le procédé comprend les étapes suivantes :
- monter l'insert de manière amovible sur l'appareil en passant la broche à travers un trou traversant de l'insert ;
- percer par friction à chaud un orifice dans le support en mettant en rotation la broche autour d'un axe de rotation et en translatant la broche selon l'axe de rotation pour exercer une pression de la broche contre le support, de manière à former, à partir de la matière du support percé, un manchon autour de l'orifice ;
- souder l'insert au manchon en exerçant une pression de l'insert contre le manchon ; et
- retirer la broche de l'insert.

Ainsi, on fournit un procédé plus rapide à mettre en oeuvre car il utilise un même appareil pour percer et souder. On peut donc s'affranchir d'utiliser deux appareils distincts, un appareil pour percer l'orifice et un autre appareil pour souder l'insert, ce qui améliore la maîtrise du procédé. En outre, l'étape de soudure est améliorée car elle est effectuée pendant que le manchon est en formation, c'est-à-dire lorsque le manchon est souple, à la différence de l'état de la technique où elle est effectuée après un refroidissement du manchon.

Lors de l'étape de soudure, la pression de l'insert peut être exercée contre le manchon en poursuivant l'étape de translation de la broche selon l'axe de rotation.

On accélère ainsi la mise en oeuvre du procédé en effectuant l'étape de soudure consécutivement, c'est-à-dire sans interruption, à l'étape de perçage.

L'insert peut être une entretoise ou un écrou.

Selon un mode de mise en oeuvre, lors de l'étape de montage, l'insert est monté amovible sur le corps de l'appareil, et lors de l'étape de soudure, le corps de l'appareil translate selon l'axe de rotation pour exercer la pression de l'insert contre le manchon.

Ainsi, le corps de l'appareil a une fonction de butée pour maintenir la pression exercée sur l'insert.

Selon un autre mode de mise en oeuvre, lors de l'étape de montage, l'insert est monté amovible sur la broche, et lors de l'étape de soudure, la broche et l'insert sont animés en translation selon l'axe de rotation pour exercer la pression de l'insert contre le manchon.

Selon cet autre mode de mise en oeuvre, lors de l'étape de soudure, la broche et l'insert sont en outre animés en rotation autour de l'axe de rotation.

Ainsi, l'insert est animé en rotation pour entraîner une friction de l'insert contre le manchon, ce qui fournit une soudure homogène entre l'insert et le support.

Selon encore cet autre mode de mise en oeuvre, l'insert et le support peuvent être en métal.

En variante, le support peut comporter au moins un matériau polymère.
Lors de l'étape de soudure, l'insert peut être soudé sur une lèvre du manchon formée en saillie du support.

L'insert peut comporter un premier tronçon d'un premier diamètre extérieur et un deuxième tronçon d'un deuxième diamètre extérieur inférieur au premier diamètre, et lors de l'étape de soudure, le deuxième tronçon est introduit dans l'orifice.

En variante, l'insert comporte un premier tronçon d'un premier diamètre extérieur et un deuxième tronçon d'amorce d'un deuxième diamètre extérieur inférieur au premier diamètre, et lors de l'étape de soudure, le deuxième tronçon d'amorce permet d'amorcer la soudure de l'insert au manchon.

Selon un autre mode de mise en oeuvre, l'insert peut être à sertir, et le procédé comprend, après l'étape de perçage, une introduction de l'insert à travers l'orifice, et comprendre en outre, après l'étape de soudure, une déformation de l'insert de façon à former un bourrelet de sertissage pour sertir l'insert sur le support.

Ainsi, on fournit un procédé plus rapide à mettre en oeuvre car il utilise un même appareil pour percer, souder et sertir un insert à sertir. On peut donc s'affranchir d'utiliser plusieurs appareils distincts, un appareil pour percer l'orifice, un autre appareil pour souder l'insert et un appareil pour sertir, ce qui améliore la maîtrise du procédé. En outre, on améliore l'assemblage de l'insert sur le support, en offrant une meilleure tenue mécanique de l'ensemble.

Lors de l'étape de déformation, la broche peut translater selon l'axe de rotation et selon une direction opposée à celle de la translation de la broche lors de l'étape de perçage.

L'insert peut comporter une tête d'appui et l'appareil comporte un roulement mécanique en contact avec la tête d'appui, et lors de l'étape de déformation la broche et l'insert sont en outre animées en rotation autour de l'axe de rotation.

### Description sommaire des dessins

D'autres avantages et caractéristiques de l'invention apparaîtront à l'examen de la description détaillée de modes de mise en oeuvre, nullement limitatifs, et des dessins annexés sur lesquels :
- les figures 1 à 4, illustrent schématiquement une vue en coupe des principales étapes d'un mode de mise en oeuvre d'un procédé d'assemblage d'un insert sur un support selon l'invention ;
- la figure 5, illustre schématiquement une vue en coupe d'un autre mode de mise en oeuvre du procédé d'assemblage ;
- les figures 6 à 8, illustrent schématiquement une vue en coupe des principales étapes d'un autre mode de mise en oeuvre du procédé d'assemblage d'un insert sur un support, et
- les figures 9 à 13, illustrent schématiquement une vue en coupe des principales étapes d'un autre mode de mise en oeuvre d'un procédé d'assemblage d'un insert à sertir sur un support selon l'invention.

### Description détaillée

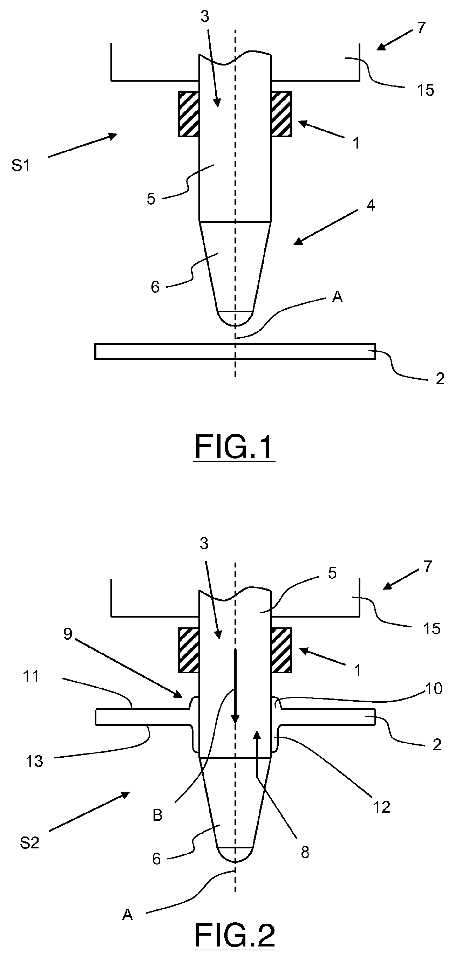

Sur les figures 1 à 4, on a représenté les principales étapes d'un procédé d'assemblage d'un insert 1 sur un support 2. L'insert 1 peut être un écrou ou une entretoise. Un écrou est une pièce creuse taraudée, c'est-à-dire qui comporte un filetage interne, destinée à être fixée à une autre pièce filetée. Une entretoise est une pièce de liaison destinée à être placée transversalement entre le support 2 et une pièce secondaire. Une entretoise permet, notamment, de maintenir un écartement constant entre le support 2 et la pièce secondaire. L'entretoise peut également comporter un tronçon muni d'un filetage interne. De manière générale, l'insert 1 comporte un trou traversant 3. Le procédé d'assemblage comporte une étape de montage S1, une étape de perçage S2, une étape de soudure S3 et une étape de retrait S4.

Lors de l'étape de montage S1, illustrée à la figure 1, on monte l'insert 1 sur un appareil 7. L'appareil 7 comprend un corps 15 et une broche 4 montée à rotation autour d'un axe de rotation A sur le corps 15. La broche 4 comprend un corps cylindrique 5 muni à une extrémité d'une tête conique 6. On entend ici par cylindre, un solide limité par une surface cylindrique engendrée par une droite, notée génératrice, parcourant une courbe plane fermée, notée directrice, et deux plans parallèles coupant les génératrices. L'axe de rotation A correspond à un axe longitudinal du corps cylindrique 5 de la broche 4. L'appareil 7 est motorisé pour entraîner en rotation la broche 4 autour de l'axe de rotation A. De façon générale, l'insert 1 est monté de manière amovible sur l'appareil 7 afin de pouvoir retirer la broche 4 de l'insert 1 après avoir assemblé l'insert 1 sur le support 2. Plus particulièrement, lors de l'étape de montage S1, la broche 4 passe par le trou traversant 3 de l'insert 1. Selon un mode de mise en oeuvre, l'insert 1 est monté amovible sur le corps 15 de l'appareil 7, et dans ce cas l'insert 1 ne tourne pas lorsque la broche 4 est animée en rotation. Par exemple l'insert peut être vissé au corps 15 de l'appareil 7. Par exemple, l'insert 1 est maintenu en position axiale par un élément extérieur qui ne pénètre pas à l'intérieur de l'insert 1. L'insert 1 peut encore être monté fou sur la broche 4 et maintenu axialement par un anneau métallique escamotable après assemblage de l'insert au support. En variante, l'insert 1 peut être monté amovible sur le corps 15 de l'appareil par des moyens d'aimantation. Selon un autre mode de mise en oeuvre, l'insert 1 est monté amovible sur la broche 4, comme illustré sur la figure 1, et dans ce cas l'insert 1 tourne autour de l'axe de rotation A lorsque la broche 4 est animée en rotation. L'insert 1 peut être vissé directement à la broche 4. Par exemple, la broche 4 comporte un tronçon muni d'un filetage externe pour coopérer avec un filetage interne situé au niveau des parois internes du trou traversant 3 de l'insert 1. Un tel montage est particulièrement adapté lorsque l'insert 1 est un écrou. En variante, le trou traversant 3 de l'insert 1 peut comporter des faces internes planes. La section du trou traversant 3 peut alors avoir une forme polygonale pour coopérer avec un tronçon de la broche 4 ayant une section polygonale équivalente. On peut encore envisager de maintenir l'insert 1 sur la broche 4 par aimantation. On peut clipper l'insert 1 sur la broche 4.

L'étape de perçage S2, illustrée à la figure 2, est effectuée après l'étape de montage S1. Lors du perçage S2, on perce par friction à chaud un orifice 8 dans le support 2, c'est-à-dire qu'on perce sans enlèvement de matière. A la différence d'un perçage par enlèvement de matière, le perçage par friction à chaud permet de former, à partir de la matière du support percé, un manchon 9 autour de l'orifice 8. Le perçage par friction à chaud S2 est obtenu en mettant en rotation la broche 4 autour de l'axe de rotation A et en translatant la broche 4 selon l'axe de rotation A pour exercer une pression axiale de la tête conique 6 contre le support 2. En particulier, la translation de la broche 4 est effectuée simultanément à sa mise en rotation selon le même axe de rotation A. La translation de la broche 4 est effectuée en direction du support 2, indiquée sur la figure 2 par la référence B. La pression axiale est effectuée le long de l'axe de rotation A contre le support 2. L'appareil 7 est en outre configuré pour déplacer la broche 4 en translation selon l'axe de rotation A tout en animant en rotation la broche 4 autour de l'axe de rotation A. En d'autres termes, le contact entre la tête conique 6 et le support 2 engendre une friction sur le support 2 qui produit de la chaleur localement. La chaleur adoucit le support 2 et la broche 4 traverse le support 2, formant l'orifice 8 souhaité. De préférence, la tête conique 6 est réalisée à l'aide d'un matériau résistant à la chaleur, tel que l'acier, la céramique, ou un matériau en carbure. Le perçage par fiction à chaud est particulièrement adapté à des supports à paroi mince puisque la matière chauffée doit pouvoir s'écouler pour former le manchon 9. De préférence, le support 2 a une paroi mince, c'est-à-dire une paroi dont l'épaisseur est inférieure ou égale au rayon de l'orifice 8 réalisé dans le support 2. Une telle paroi mince n'est ni adaptée pour effectuer un taraudage, ni adaptée pour effectuer un trou par perçage par enlèvement de matière, qui sont des étapes qui risquent de déformer le support 2. En outre, le support 2 peut être réalisé en métal, par exemple en acier, ou comprendre un matériau polymère. On entend par matériau polymère, un solide qui comprend un polymère naturel, tels que des constituants des végétaux, par exemple la cellulose ou le caoutchouc naturel, et/ou qui comprend un polymère synthétique, par exemple le polyéthylène ou les polyoléfines. Avantageusement, le perçage par friction à chaud ne nécessite pas d'avoir accès aux deux côtés du support 2. Par ailleurs, lors d'un perçage par friction à chaud, la matière qui est chauffée n'est pas enlevée, mais forme le manchon 9 autour de l'orifice 8. Le manchon 9 s'étend parallèlement à l'axe de rotation A. La hauteur du manchon 9, le long de l'axe de rotation A, peut être égale jusqu'à trois fois l'épaisseur du support 2. Le manchon 9 comporte une première lèvre 10 formée en saillie d'une première surface 11 du support 2, et une deuxième lèvre 12 opposée à la première lèvre 10, et formée en saillie d'une deuxième face 13 du support 2. La première lèvre 10 est formée en direction de l'insert 1.

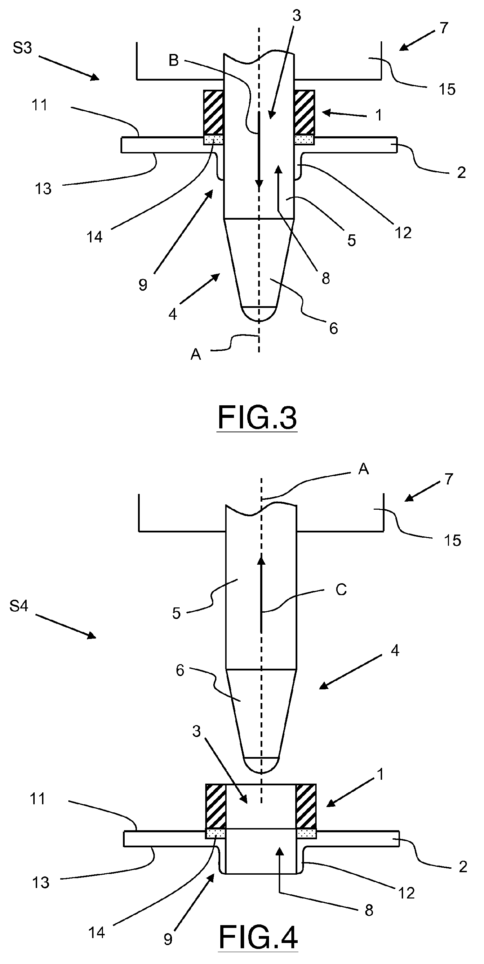

Puis, on soude S3 l'insert 1 au manchon 9, tel qu'illustré à la figure 3, en exerçant une pression de l'insert 1 contre le manchon 9. Avantageusement, lors de l'étape de soudure S3, la pression de l'insert 1 est exercée contre le manchon 9 tout en poursuivant l'étape de translation de la broche 4 selon l'axe de rotation A. Ainsi, on accélère le procédé d'assemblage. En outre, l'étape de soudure S3 est réalisée pendant la formation du manchon 9, c'est-à-dire lorsque le manchon 9 est souple pour faciliter la soudure. Préférentiellement, l'étape de soudure S3 est réalisée consécutivement à l'étape de perçage S2, ce qui réduit le nombre des étapes à réaliser. En effet, on ne retire pas la broche 4 de l'orifice 8 entre l'étape de perçage S2 et l'étape de soudure S3, au contraire, on prolonge l'étape de perçage S2 en poursuivant l'étape de translation de la broche 4 pour souder l'insert 1. De manière générale, lors de l'étape de soudure S3, l'appareil 7 amène l'insert 1 contre le manchon 9 en formation, et en particulier contre la première lèvre 10 du manchon 9. Avantageusement, l'étape de soudure S3 peut être réalisée pendant que la broche 4 est animée en rotation. Ainsi, la mise en rotation de la broche 4 permet de maintenir une friction sur le manchon 9 afin qu'il puisse rester souple pour favoriser la soudure de l'insert 1. Sur la figure 3 on a représenté la zone de soudure entre l'insert 1 et le manchon 9 par la référence 14.

Selon un mode de mise en oeuvre, l'insert 1 est monté amovible sur le corps 15 de l'appareil 7. En particulier, l'insert 1 est monté bloqué en rotation sur le corps 15 de l'appareil 7. La soudure S3 est alors réalisée par la translation du corps 15 de l'appareil 7 selon l'axe de rotation A. Ainsi, l'appareil 7 translate simultanément l'insert 1 et la broche 4 selon la direction B. La translation de l'insert 1 permet d'exercer la pression axiale B sur l'insert 1 pour appuyer l'insert 1 contre la première lèvre 10 souple du manchon 9. Dans ce mode de mise en oeuvre, l'appareil 7 a un rôle de butée pour maintenir la pression axiale sur l'insert 1 selon la direction B. Ce mode de mise en oeuvre est particulièrement adapté lorsque l'insert 1 et le support 2 sont réalisés avec des matériaux différents, et notamment lorsque le support 2 est réalisé dans un matériau plus malléable que celui de l'insert 1. Par exemple l'insert 1 peut être en métal et le support 2 peut comprendre au moins un matériau polymère. Dans ce cas, la soudure métal sur polymère ne nécessite pas une étape de friction de l'insert contre le manchon 9. En effet, le manchon est alors suffisamment souple pour que la soudure puisse être effectuée par pression de l'insert contre le manchon 9. On peut réaliser la soudure S3 en translatant l'appareil 7 selon l'axe de rotation A et sans animer la broche 4 en rotation. De préférence, lors de la soudure S3, on translate l'appareil 7 selon l'axe de rotation A tout en animant la broche 4 en rotation autour de l'axe A de façon à maintenir une friction sur le manchon 9 pour limiter son refroidissement.

Selon un mode de mise en oeuvre préféré, l'insert 1 est monté amovible sur la broche 4, comme illustré sur les figures 1 à 4. La soudure S3 est alors réalisée par la translation de la broche 4 et de l'insert 1 selon l'axe de rotation A. En outre, l'insert 1 est animé en rotation autour de l'axe de rotation A lors de la soudure. Dans ce cas, on conserve une continuité du mouvement tournant pour percer et pour souder. Ainsi on simplifie le procédé puisqu'on n'arrête pas la rotation de la broche 4 pour passer du perçage à la soudure. En outre, en animant en rotation l'insert 1 pendant la soudure, on entraîne une friction de l'insert 1 contre le manchon 9. Cette friction permet d'empêcher le manchon 9 de se refroidir. Ceci permet de fournir une soudure homogène de l'insert avec le manchon 9, car on entretient l'apport de calories procuré par friction jusqu'à la fusion, c'est-à-dire jusqu'à la soudure. Ce mode de mise en oeuvre préféré est particulièrement adapté lorsque l'insert 1 et le support 2 sont réalisés avec le même matériau, et plus particulièrement lorsqu'ils sont en métal.

Dans les deux modes de mise en oeuvre cités ci-avant, c'est-à-dire avec un insert 1 animé ou non en rotation, lors de la soudure S3, on déforme la première lèvre souple 10 du manchon 9 et on l'aplatit pour former la zone de soudure 14. Par ailleurs, grâce à la soudure de l'insert 1 sur la première lèvre 10 du manchon 9, on peut souder l'insert 1 sur la première surface 11 sans introduire aucun élément à l'intérieur de l'orifice 8.

Dans une dernière étape du procédé S4, illustrée à la figure 4, on arrête la rotation de la broche 4, et on retire la broche 4 de l'insert 1. En particulier, on retire la broche 4 en la translatant selon l'axe de rotation A et dans une direction C opposée à celle de la translation B de la broche 4 lors de la soudure S3. L'arrêt de la rotation de la broche 4 entraîne un refroidissement du manchon 9 car il n'est plus soumis aux frictions. On maintient l'insert 1 en pression sur le manchon 9 pendant le refroidissement pour réaliser la soudure.

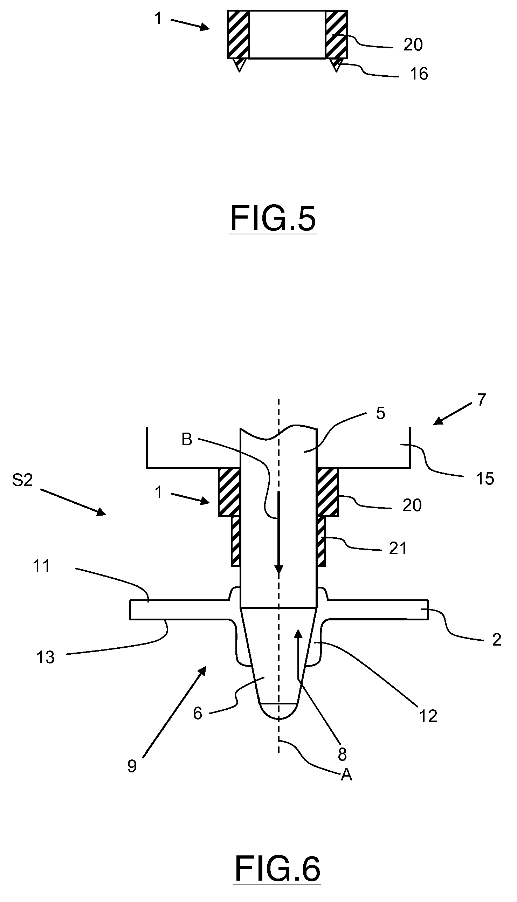

Sur la figure 6, on a représenté une variante du procédé d'assemblage, selon laquelle l'insert 1 comporte un tronçon d'amorce 16 de soudure. L'insert 1 comporte un premier tronçon 20 d'un premier diamètre extérieur et un deuxième tronçon d'amorce 16 d'un deuxième diamètre extérieur inférieur au premier diamètre. Par exemple, le tronçon d'amorce 16 peut être une couronne située sur la face de l'insert 1 qui est en regard du support 2. De préférence, la couronne 16 comporte une partie en pointe qui pénètre plus facilement le support 2 lors de la soudure. Le deuxième tronçon d'amorce 16 permet ainsi d'amorcer la soudure de l'insert 1 au manchon, et en particulier d'amorcer la fusion de la première lèvre 10 du manchon 9 lorsque l'insert 1 est animé en rotation pendant la soudure.

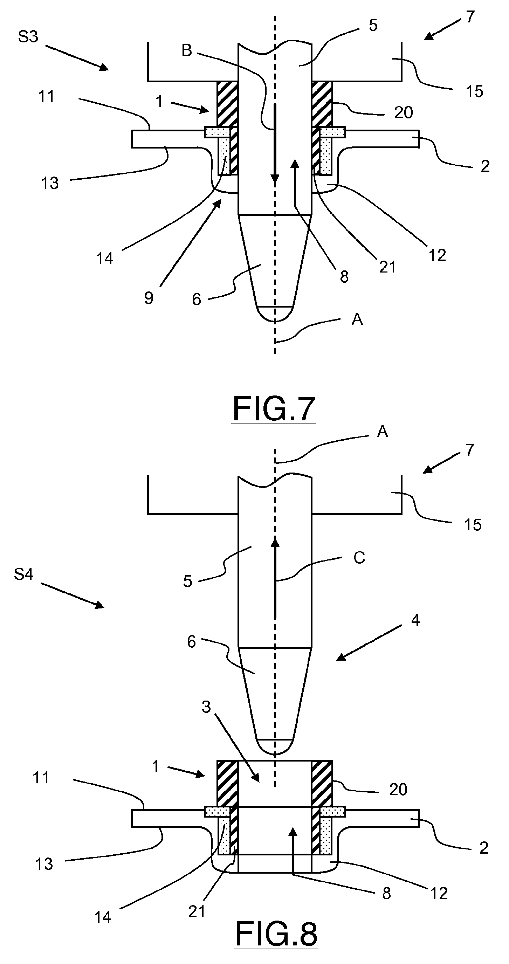

Sur les figures 6 à 8, on a représenté une variante du procédé d'assemblage décrit ci-avant. Selon cette variante, l'insert 1 comporte un premier tronçon 20 d'un premier diamètre extérieur et un deuxième tronçon 21 d'un deuxième diamètre extérieur inférieur au premier diamètre. En outre, l'insert 1 est monté amovible sur le corps 15 de l'appareil 7. L'insert 1 comporte un épaulement formé sur le premier tronçon 20. Lors de l'étape de soudure S3, illustrée à la figure 7, on introduit le deuxième tronçon dans l'orifice 8. Dans ce cas, l'épaulement de l'insert 1 est soudé à la première lèvre 10 du manchon 9, c'est-à-dire à l'extérieur de l'orifice 8. En outre, le deuxième tronçon 21 est soudé à la deuxième lèvre 12 du manchon 9, c'est-à-dire à l'intérieur de l'orifice 8. Puis on retire la broche 4 de l'insert 1, comme illustré sur la figure 8. L'insert 1 peut encore avoir une surface extérieure qui présente plusieurs faces axiales de manière à présenter des surfaces planes comme moyen anti-rotation de l'insert 1.

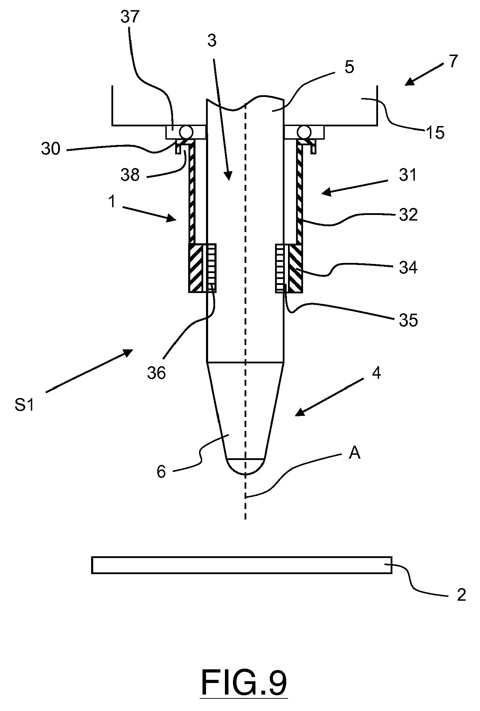

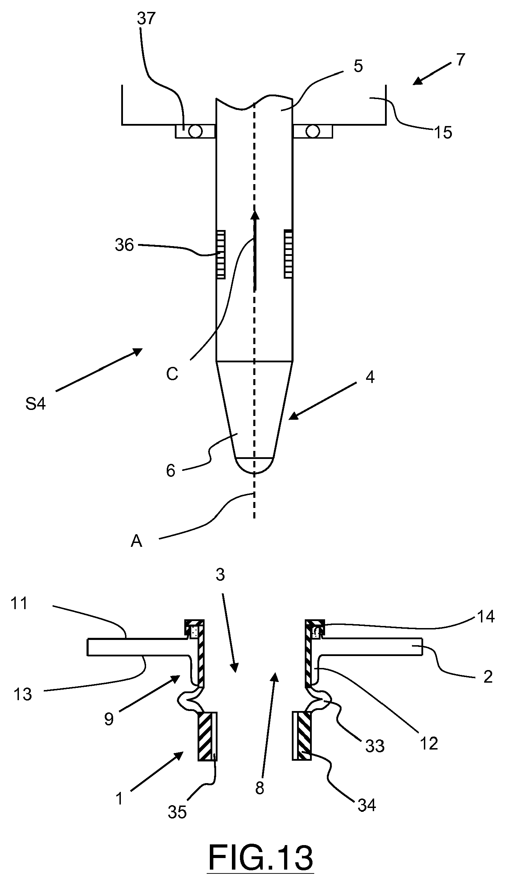

Sur les figures 9 à 13, on a représenté une autre variante du procédé d'assemblage décrit ci-avant. Cette autre variante permet d'améliorer la liaison mécanique entre l'insert 1 et le support 2. Selon cette autre variante, l'insert 1 est à sertir. C'est-à-dire que l'insert 1 comporte une tête d'appui 30 et un fût 31 s'étendant longitudinalement depuis la tête d'appui 30, le fût comprenant un tronçon de sertissage 32 qui peut être déformé par traction selon un axe longitudinal de l'insert 1, de manière à former un bourrelet de sertissage 33 destiné à fixer l'insert 1 au support 2, en coinçant le support 2 entre la tête d'appui 30 de l'insert 1 et le bourrelet de sertissage 33 ainsi formé, comme illustre sur la figure 13. De préférence, l'insert 1 est un écrou à sertir dont le fût 31 est creux et comprend un tronçon taraudé 34 pourvu d'un filetage interne 35, le tronçon de sertissage 32 étant situé entre la tête d'appui 30 et le tronçon taraudé 34.

En outre, l'insert à sertir 1 est, de préférence, monté amovible sur la broche 4 de l'appareil 7, lors de l'étape de montage S1 illustrée à la figure 9. Dans ce cas, la broche 4 comporte un filetage externe 36 qui s'introduit dans le filetage interne de l'insert 1. L'insert 1 est alors solidaire de la broche 4. Le corps 15 de l'appareil 7 peut comprendre un roulement mécanique 37, à billes ou à rouleaux, comme par exemple une butée à billes, en contact avec la tête d'appui 30 de l'insert 1. Ainsi on facilite la rotation de l'insert 1, qui rencontre moins de frottements, autour de l'axe longitudinal A lorsque la broche 4 est animée en rotation.

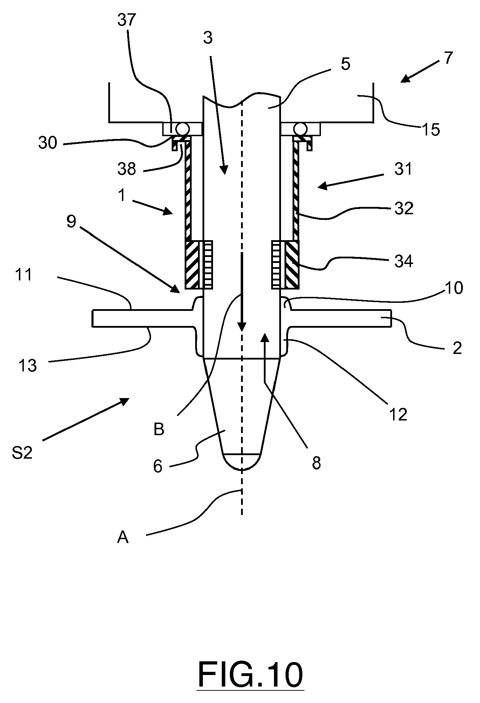

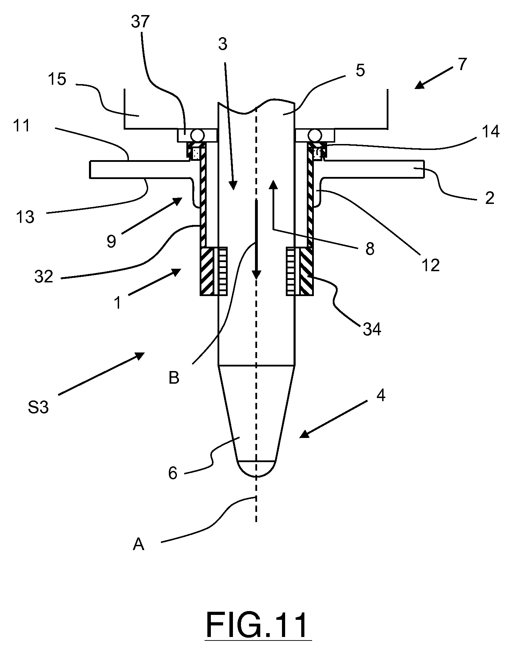

Après avoir monté l'insert 1 sur la broche 4, on effectue l'étape de perçage par friction à chaud S2 décrite ci-avant et comme illustré sur la figure 10. Puis on introduit l'insert 1 à travers l'orifice 8 formé lors de l'étape de perçage précédente S2, comme illustré à la figure 11. En particulier, l'introduction de l'insert 1 est effectuée en continuant à translater la broche 4 selon la direction B et de sorte que le tronçon de sertissage 32 se positionne, en partie, au-delà de la deuxième lèvre 12 du manchon 9. Ainsi, on ne retire pas la broche 4 de l'orifice 8 entre l'étape de perçage et l'étape d'introduction. Lorsque l'insert 1 est solidaire de la broche 4, la rotation de la broche 4 permet de maintenir une friction sur le manchon 9 afin qu'il puisse rester souple pour favoriser l'introduction de l'insert 1. Puis, on soude S3 l'insert 1 au manchon 9 comme décrit ci-avant et comme illustré à la figure 11. La tête d'appui 30 de l'insert 1 peut comprendre une rainure 38. Dans ce cas, lors de la soudure S3, la première lèvre 10 du manchon 9 s'introduit dans la rainure pour former la soudure 14. La rainure 38 assure une étanchéité entre le support 2 et l'insert 1.

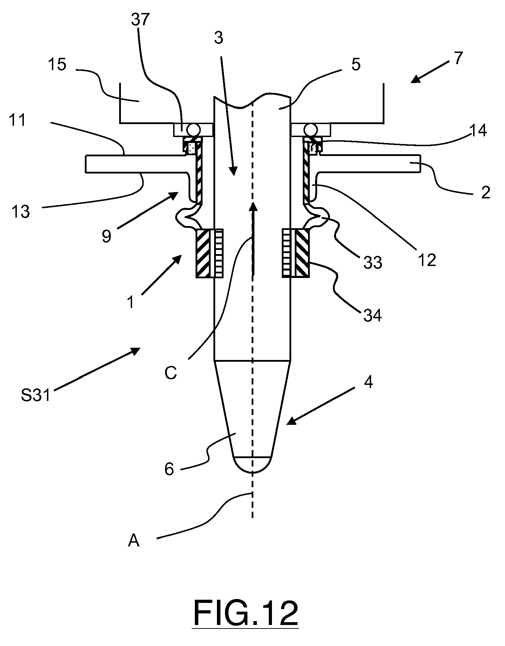

Puis, après l'étape de soudure S3, on effectue une étape de déformation S31 de l'insert 1 de façon à former le bourrelet de sertissage 33 pour sertir l'insert 1 sur le support 2, comme illustré à la figure 12. Lors de l'étape de déformation S31, la broche 4 translate selon l'axe de rotation A et selon la direction C opposée à celle de la translation B de la broche 4 lors de la soudure S3. Lors de la translation de la broche 4 selon la direction C, on exerce une traction sur l'insert 1 pour déplacer le tronçon taraudé 34 vers la deuxième face 13 du support 2. La tête d'appui 30 reste en contact avec le corps de l'appareil 7, par exemple par l'intermédiaire du roulement mécanique 37. Le déplacement du tronçon taraudé 34 raccourcit l'insert 1 et crée le bourrelet de sertissage 33 pour sertir l'insert 1 au manchon 9. La déformation S31 de l'insert 1 permet d'exercer une pression de l'insert 1 contre le manchon 9 et participe à créer une étanchéité entre le support 2 et l'insert 1. En outre, la broche 4 et l'insert 1 peuvent être animés en rotation autour de l'axe de rotation A pendant l'étape de déformation S31. Dans ce cas, l'insert 1 exerce une friction contre la deuxième lèvre 12 du manchon 9 et offre un ajustement homogène entre l'insert 1 et le support 2. Selon un autre mode de mise en oeuvre, l'insert 1 est monté de manière amovible sur une deuxième broche de traction couplée à l'appareil 7 et configurée pour déformer l'insert 1 par une translation selon la direction C. La deuxième broche est creuse, et la broche 4 est introduite à travers la deuxième broche. Ainsi, l'insert 1 ne tourne pas lorsque la broche 4 est animée en rotation. Par exemple, après l'étape de soudure S3, on peut arrêter la rotation de la broche 4, puis déformer S31 l'insert 1 pour le sertir au support 2.

L'insert 1 peut également être monté amovible sur le corps 15 de l'appareil 7, et on translate le corps de l'appareil 7 selon la direction C pour déformer S31 l'insert 1. Dans ce cas, le corps de l'appareil 7 a une fonction de butée pour maintenir la déformation sur l'insert 1.

Puis on retire S4 la broche 4, en dévissant la broche 4 par inversion du sens de rotation de la broche 4, comme illustré sur la figure 13.

Ainsi, à la place de percer en enlevant de la matière, le perçage par friction à chaud permet d'obtenir un ensemble plus résistant. Un tel procédé permet d'assembler un insert, tel un écrou ou une entretoise, sur un support, de préférence un support ayant une paroi mince. On peut ainsi assembler des inserts plus résistants que le support.

## Revendications

1. Procédé d'assemblage d'un insert (1) sur un support (2), comprenant un appareil (7) muni d'une broche (4) montée à rotation sur un corps de l'appareil (7), **caractérisé en ce qu'**il comprend les étapes suivantes :
- monter l'insert (1) de manière amovible sur l'appareil (7) en passant la broche (4) à travers un trou traversant (3) de l'insert (1) ;
- percer par friction à chaud un orifice (8) dans le support (2) en mettant en rotation la broche (4) autour d'un axe de rotation (A) et en translatant la broche (4) selon l'axe de rotation (A) pour exercer une pression de la broche (4) contre le support (2), de manière à former, à partir de la matière du support percé, un manchon (9) autour de l'orifice (8) ;
- souder l'insert (1) au manchon (9) en exerçant une pression de l'insert (1) contre le manchon (9) ; et
- retirer la broche (4) de l'insert (1).

2. Procédé selon la revendication 1, dans lequel, lors de l'étape de soudure, la pression de l'insert (1) est exercée contre le manchon (9) en poursuivant l'étape de translation de la broche (4) selon l'axe de rotation (A).

3. Procédé selon la revendication 1 ou 2, dans lequel l'insert (1) est une entretoise.

4. Procédé selon la revendication 1 ou 2, dans lequel l'insert (1) est un écrou.

5. Procédé selon l'une des revendications 1 à 4, dans lequel, lors de l'étape de montage, l'insert (1) est monté amovible sur le corps de l'appareil (7), et lors de l'étape de soudure, le corps de l'appareil (7) translate selon l'axe de rotation (A) pour exercer la pression de l'insert (1) contre le manchon (9).

6. Procédé selon l'une des revendications 1 à 4, dans lequel, lors de l'étape de montage, l'insert (1) est monté amovible sur la broche (4), et lors de l'étape de soudure, la broche (4) et l'insert (1) sont animés en translation selon l'axe de rotation (A) pour exercer la pression de l'insert (1) contre le manchon (9).

7. Procédé selon la revendication 6, dans lequel, lors de l'étape de soudure, la broche (4) et l'insert (1) sont en outre animés en rotation autour de l'axe de rotation (A).

8. Procédé selon la revendication 7, dans lequel l'insert (1) et le support (2) sont en métal.

9. Procédé selon l'une des revendications 1 à 7, dans lequel le support (2) comporte au moins un matériau polymère.

10. Procédé selon l'une des revendications 1 à 9, dans lequel, lors de l'étape de soudure, l'insert (1) est soudé sur une lèvre (10) du manchon (9) formée en saillie du support (2).

11. Procédé selon l'une des revendications 1 à 10, dans lequel l'insert (1) comporte un premier tronçon (20) d'un premier diamètre extérieur et un deuxième tronçon (21) d'un deuxième diamètre extérieur inférieur au premier diamètre, et lors de l'étape de soudure, le deuxième tronçon (21) est introduit dans l'orifice (8).

12. Procédé selon l'une des revendications 1 à 10, dans lequel l'insert (1) comporte un premier tronçon (20) d'un premier diamètre extérieur et un deuxième tronçon d'amorce (16) d'un deuxième diamètre extérieur inférieur au premier diamètre, et lors de l'étape de soudure, le deuxième tronçon d'amorce (16) permet d'amorcer la soudure de l'insert (1) au manchon (9).

13. Procédé selon l'une des revendications 1 à 12, dans lequel l'insert (1) est à sertir, et le procédé comprend, après l'étape de perçage, une introduction de l'insert (1) à travers l'orifice (8), et comprend en outre, après l'étape de soudure, une déformation de l'insert (1) de façon à former un bourrelet de sertissage pour sertir l'insert (1) sur le support (2).

14. Procédé selon la revendication 13, dans lequel, lors de l'étape de déformation, la broche (4) translate selon l'axe de rotation (A) et selon une direction opposée à celle de la translation de la broche (4) lors de l'étape de perçage.

15. Procédé selon la revendication 13 ou 14, dans lequel l'insert (1) comporte une tête d'appui et l'appareil comporte un roulement mécanique en contact avec la tête d'appui, et lors de l'étape de déformation la broche (4) et l'insert (1) sont en outre animés en rotation autour de l'axe de rotation (A).

## Patentansprüche

1. Verfahren zum Befestigen eines Einsatzes (1) an einem Träger (2), das eine Vorrichtung (7) umfasst, die mit einem Dorn (4) versehen ist, der drehbar auf einen Körper der Vorrichtung (7) montiert ist, **dadurch gekennzeichnet, dass** es folgende Schritte umfasst:
- das abnehmbare Montieren des Einsatzes (1) an die Vorrichtung (7), indem der Dorn (4) durch eine durchgehende Öffnung (3) des Einsatzes (1) geführt wird;
- das Bohren einer Öffnung (8) in den Träger (2) durch Heißreibung, indem der Dorn (4) um eine Drehachse (A) herum in Drehung versetzt und der Dorn (4) gemäß der Drehachse (A) translatorisch bewegt wird, um einen Druck des Dorns (4) gegen den Träger (2) auszuüben, um ausgehend von dem Material des durchstoßenen Trägers eine Hülse (9) um die Öffnung (8) herum zu bilden;
- das Schweißen des Einsatzes (1) an die Hülse (9), indem ein Druck des Einsatzes (1) auf die Hülse (9) ausgeübt wird; und
- das Entfernen des Dorns (4) aus dem Einsatz (1).

2. Verfahren nach Anspruch 1, bei dem während des Schweißens der Druck des Einsatzes (1) auf die Hülse (9) ausgeübt wird, indem die translatorische Bewegung des Dorns (4) gemäß der Drehachse (A) aufrechterhalten wird.

3. Verfahren nach Anspruch 1 oder 2, bei dem der Einsatz (1) ein Abstandsstück ist.

4. Verfahren nach Anspruch 1 oder 2, bei dem der Einsatz (1) eine Mutter ist.

5. Verfahren nach einem der Ansprüche 1 bis 4, bei dem der Einsatz (1) bei der Montage abnehmbar montiert wird an den Körper der Vorrichtung (7), und sich der Körper der Vorrichtung (7) beim Schweißvorgang gemäß der Drehachse (A) translatorisch verlagert, um den Druck des Einsatzes (1) auf die Hülse (9) auszuüben.

6. Verfahren nach einem der Ansprüche 1 bis 4, bei dem der Einsatz (1) bei der Montage abnehmbar montiert wird an den Dorn (4) und der Dorn (4) und der Einsatz (1) beim Schweißvorgang translatorisch entlang der Drehachse (A) bewegt werden, um den Druck des Einsatzes (1) gegen die Hülse (9) auszuüben.

7. Verfahren nach Anspruch 6, bei dem während des Schweißvorgangs der Dorn (4) und der Einsatz (1) ferner um die Drehachse (A) in Drehung angetrieben werden.

8. Verfahren nach Anspruch 7, bei dem der Einsatz (1) und der Träger (2) aus Metall sind.

9. Verfahren nach einem der Ansprüche 1 bis 7, bei dem der Träger (2) mindestens ein polymeres Material umfasst.

10. Verfahren nach einem der Ansprüche 1 bis 9, bei dem während des Schweißvorgangs der Einsatz (1) an eine Lippe (10) der Hülse (9) geschweißt ist, die gegenüber dem Träger (2) hervorsteht.

11. Verfahren nach einem der Ansprüche 1 bis 10, bei dem der Einsatz (1) ein erstes Teilstück (20) mit einem ersten Außendurchmesser und ein zweites Teilstück (21) mit einem zweiten Außendurchmesser umfasst, der kleiner ist als der erste Durchmesser, und das zweite Teilstück (21) während des Schweißvorgangs in die Öffnung (8) eingeführt wird.

12. Verfahren nach einem der Ansprüche 1 bis 10, bei dem der Einsatz (1) ein erstes Teilstück (20) mit einem ersten Außendurchmesser und ein zweites Teilstück (16) mit einem zweiten Außendurchmesser umfasst, der kleiner ist als der erste Durchmesser, und das zweite Einleitungsteilstück (16) das Schweißen des Einsatzes (1) an die Hülse (9) einleitet.

13. Verfahren nach einem der Ansprüche 1 bis 12, bei dem der Einsatz (1) zu bördeln ist und das Verfahren nach dem Bohrungsschritt eine Einführung des Einsatzes (1) durch die Öffnung (8) und ferner nach dem Schweißvorgang eine Verformung des Einsatzes (1) in der Weise umfasst, dass eine Bördelwulst zum Bördeln des Einsatzes (1) auf den Träger (2) entsteht.

14. Verfahren nach Anspruch 13, bei dem sich der Dorn (4) während des Verformungsvorgangs entlang der Drehachse (A) translatorisch und beim Bohrungsschritt entlang einer der Translationsrichtung des Doms (4) entgegengesetzten Richtung bewegt.

15. Verfahren nach Anspruch 13 oder 14, bei dem der Einsatz (1) einen Auflagekopf und das Gerät ein mit dem Auflagekopf in Berührung stehendes mechanisches Lager umfasst, und der Dorn (4) und der Einsatz (1) während des Verformungsvorgangs außerdem um die Drehachse (A) in Drehung angetrieben werden.

## Claims

1. Method for assembling an insert (1) on a support (2), comprising an apparatus (7) provided with a pin (4) mounted rotating on the body of the apparatus (7), **characterized in that** it comprises the following steps:
- fitting the insert (1) in removable manner on the apparatus (7) passing the pin (4) through a pass-through hole (3) of the insert (1);
- drilling an opening (8) in the support (2) by hot friction making the pin (4) rotate around an axis of rotation (A) and translating the pin (4) in the direction of the axis of rotation (A) to exert a pressure of the pin (4) against the support (2), so as to form a sleeve (9) around the opening (8), from the drilled support material;
- welding the insert (1) to the sleeve (9) by exerting a pressure of the insert (1) against the sleeve (9); and
- removing the pin (4) from the insert (1).

2. Method according to claim 1, wherein, during the welding step, the pressure of the insert (1) is exerted against the sleeve (9) by continuing the translation step of the pin (4) in the direction of the axis of rotation (A).

3. Method according to claim 1 or 2, wherein the insert (1) is a spacer.

4. Method according to claim 1 or 2, wherein the insert (1) is a nut.

5. Method according to one of claims 1 to 4, wherein, during the mounting step, the insert (1) is mounted removable on the body of the apparatus (7), and during the welding step, the body of the apparatus (7) translates in the direction of the axis of rotation (A) to exert the pressure of the insert (1) against the sleeve (9).

6. Method according to one of claims 1 to 4, wherein, during the mounting step, the insert (1) is mounted removable on the pin (4), and during the welding step, the pin (4) and insert (1) are moved in translation in the direction of the axis of rotation (A) to exert the pressure of the insert (1) against the sleeve (9).

7. Method according to claim 6, wherein, during the welding step, the pin (4) and insert (1) are further moved in rotation around the axis of rotation (A).

8. Method according to claim 7, wherein the insert (1) and support (2) are made from metal.

9. Method according to one of claims 1 to 7, wherein the support (2) comprises at least a polymer material.

10. Method according to one of claims 1 to 9, wherein, during the welding step, the insert (1) is welded onto a lip (10) of the sleeve (9) formed salient from the support (2).

11. Method according to one of claims 1 to 10, wherein the insert (1) comprises a first section (20) having a first external diameter and a second section (21) having a second external diameter smaller than the first diameter, and during the welding step, the second section (21) is inserted into the opening (8).

12. Method according to one of claims 1 to 10, wherein the insert (1) comprises a first section (20) having a first external diameter and a second initiating section (16) having a second external diameter smaller than the first diameter, and during the welding step, the second initiating section (16) enables welding of the insert (1) to the sleeve (9) to be initiated.

13. Method according to one of claims 1 to 12, wherein the insert (1) is designed to be crimped, and the method comprises, after the drilling step, insertion of the insert (1) through the opening (8), and further comprises, after the welding step, deformation of the insert (1) so as to form a crimping bead to crimp the insert (1) on the support (2).

14. Method according to claim 13, wherein, during the deformation step, the pin (4) translates in the direction of the axis of rotation (A) and in an opposite direction to that of translation of the pin (4) during the drilling step.

15. Method according to claim 13 or 14, wherein the insert (1) comprises a bearing head and the apparatus comprises a mechanical rolling in contact with the bearing head, and during the deformation step, the pin (4) and insert (1) are further moved in rotation around the axis of rotation (A).
